**Europäisches Patentamt**

**European Patent Office**

**Office européen des brevets**

(19)

(11) Veröffentlichungsnummer: **0 119 410**
**B1**

(12) **EUROPÄISCHE PATENTSCHRIFT**

(45) Veröffentlichungstag der Patentschrift:
04.01.89

(51) Int. Cl.⁴: **B 65 G 27/26, H 02 K 33/04**

(21) Anmeldenummer: **84100855.0**

(22) Anmeldetag: **27.01.84**

(54) Schwingförderer mit Rüttelförderschale.

(30) Priorität: **22.02.83 DE 3305998**

(43) Veröffentlichungstag der Anmeldung:
**26.09.84 Patentblatt 84/39**

(45) Bekanntmachung des Hinweises auf die Patenterteilung:
**04.01.89 Patentblatt 89/1**

(84) Benannte Vertragsstaaten:
**AT CH DE FR GB IT LI**

(56) Entgegenhaltungen:
**AT-B-257 462**
**DE-B-1 572 999**

(73) Patentinhaber: **ROBERT BOSCH GMBH, Postfach 50, D-7000 Stuttgart 1 (DE)**

(72) Erfinder: **Hütter, Odo, Dr. Dipl.- Ing., Hugo- Wolf- Weg 17, D-7312 Kirchheim/T. (DE)**

## Beschreibung

### Stand der Technik

Die Erfindung geht aus von einem Schwingförderer nach dem ersten Teil des Anspruchs 1. Bei einem bekannten Schwingförderer dieser Gattung (AT-B-257 462, Figur 7) ist die als Energiespeicher für die Hubbewegung dienende radialsymmetrische Blattfederanordnung durch vier um je 90° versetzt zueinander angeordnete, streifenförmige Einzelfedern gebildet, von denen jede mit einem Ende am Grundkörper und mit dem anderen Ende an einem mit der Drehstabfeder verbundenen Ringflansch befestigt ist. Diese Anordnung hat den Nachteil, daß die Blattfedern unter der Einwirkung der über die Drehstabfeder übertragenen Drehmomente auf Torsion um ihre Längsachsen beansprucht werden. Diese Beanspruchung sucht die streifenförmigen Blattfedern um ihre Längsachsen zu verwinden, wobei zwangsläufig auf die Drehstabfeder eine Hubkraft ausgeübt wird. Diese Hubkraft beeinflußt in unerwünschter Weise den getrennt vom Drehantrieb vorgesehenen Hubantrieb, weil dadurch die angestrebte Entkoppelung beider Antriebe zum Teil wieder rückgängig gemacht wird.

### Vorteile der Erfindung

Die erfindungsgemäße Anordnung mit den kennzeichnenden Merkmalen des Anspruchs 1 hat demgegenüber den Vorteil eines extrem hohen Widerstandsmomentes gegen Torsion, so daß von den Torsionsbeanspruchungen herrührende Rückwirkungen auf den Hubantrieb praktisch vernachläßigt werden können und eine sichere Abstimmung der beiden Antriebe möglich wird. Die als Vollscheibe ausgebildete, über ihren ganzen Umfang eingespannte Membranfeder bildet auch ein gegenüber der Gegenmasse genau zentriertes bzw. zentrierbares Lager, wodurch eine exakte Geradeführung der Drehstabfeder ermöglicht wird. Auch die exakte Geradeführung trägt dazu bei, die beiden Antriebe sauber voneinander zu entkoppeln und eine rechnerische Abstimmung zu ermöglichen.

Durch die in den Unteransprüchen enthaltenen Maßnahmen sind vorteilhafte Weiterbildungen der Anordnung nach dem Hauptanspruch möglich.

Besonders vorteilhaft ist es, wenn der Grundkörper in seinem der Nutzmasse zugekehrten Bereich mit einem Dreh- und Hublager für die Drehstabfeder versehen ist. Dadurch ergibt sich eine besonders exakte und dennoch reibungsarme Führung der Drehstabfeder. Durch dieses Lager, welches vorzugsweise eine Lagerbuchse aus Hartmetall haben kann, und durch die untere Führung der Drehstabfeder an der Membranfeder ergibt sich außerdem ein günstiges Moment gegen Kippen, was bei einseitiger Belastung der Rüttelförderschale wichtig ist.

Bei besonders hoch beanspruchten Schwingförderer kann es vorteilhaft sein, den unteren Endabschnitt der Drehstabfeder unverdrehbar, jedoch axial verschiebbar in einem Führungsteil zu lagern, welches fest mit dem Grundkörper verbunden ist. Durch die zusätzliche Lagerung und Verdrehsicherung der Drehstabfeder können die auf die Membranfeder übertragenen Drehmomente in vorgegebenen Grenzen gehalten werden.

Gemäß einer weiteren Gestaltung der Erfindung erfolgt der Antrieb für den Nutzhub elektromagnetisch. So kann mindestens ein Elektromagnet als mit der Grundmasse verbundene Ringspule um die Drehstabfeder angeordnet sein. Ein Permanentmagnetring kann an der Drehstabfeder befestigt und innerhalb der Magnetspule axial beweglich sein. Aufgrund dieser Anordnung übernimmt die Drehstabfeder ihre weitere Aufgabe, ohne daß dadurch die Gestaltungsmöglichkeit für die Optimierung des Schwingförderers nachteilig eingeschränkt wäre. Ferner ergeben sich aufgrund der an der Drehstabfeder angreifenden Hubkräfte in der Nutzmasse vom Zentrum ausgehende vertikale Stellkräfte, die von sich aus einen gleichmäßigen Antrieb bewirken. Hierdurch werden einseitige Belastungen an der Rüttelförderschale durch Antriebskräfte vermieden.

Gemäß einer alternativen Ausgestaltung der Erfindung können mehrere Hubmagnete zentralsymmetrisch zur Nutzmasse und vorzugsweise an deren Randbereich angreifen. Eine derartige Anordnung ist dann sinnvoll, wenn wenig Platz für die Antriebsmagnete innerhalb des Grundkörpers vorhanden ist.

Besonders durch die Verwendung der Drehstabfeder als Übertragungsmittel der Schwingerkräfte können alle möglichen Vorrichtungen für den Hubantrieb verwendet werden. So kann der Nutzhub auch durch gasförmige oder flüssige Arbeitsmittel bewirkt werden, die über entsprechende Vorrichtungen an der Drehstabfeder bzw. unmittelbar an der Nutzmasse angreifen und durch entsprechende Steuergeräte zeit- und druckgerecht dosiert werden. Vorteilhaft kann die als Hubenergiespeicher dienende Membranfeder gleichzeitig als Arbeitsfläche für die Arbeitsmittel dienen. Die Membranfeder hat den Vorteil, daß sie auch doppelt wirkend beaufschlagt werden kann.

Auch der Drehantrieb kann mit elektrischen Mitteln, insbesondere Elektromagneten erfolgen. An der Nutzmasse wird dann vorzugsweise an mehreren Stellen im Randbereich angegriffen, um dadurch ein optimales Drehmoment zu erzielen.

Im Falle elektromagnetischer Verdrehung können an mehreren Stellen im Randbereich stromführende Leiter mit der Nutzmasse verbunden werden, denen mit dem Grundkörper verbundene Permanentmagnete zugeordnet sind. Das Magnetfeld der Permanentmagnete wirkt senkrecht zur Stromrichtung der Leiterbahnen, die radial von innen nach außen führen. Dadurch ergibt sich eine Kraftwirkung tangential zur Nutzmasse, die geeignet ist, diese gegen den Grundkörper zu verdrehen. Die Verstellung kann jedoch auch über Linearmotore erfolgen, die vorzugsweise an der Peripherie der Nutzmasse angreifen.

Gemäß einer weiteren Ausgestaltung der Erfindung kann für den Antrieb der Drehbewegung eine Vorrichtung dienen, die mit gasförmigen und flüssigen Arbeitsmitteln arbeitet und die vorzugsweise, um ein günstiges Verstellmoment zu erhalten, an der Peripherie der Nutzmasse angreift.

## Zeichnung

Drei Ausführungsbeispiele des Gegenstandes der Erfindung sind mit Varianten in der Zeichnung dargestellt. Es zeigen

Figur 1 eine prinzipielle Darstellung der Erfindung,

Figur 2 einen Längsschnitt durch das erste Ausführungsbeispiel,

Figuren 3 bis 7 Varianten von Baugruppen dieses ersten Ausführungsbeispiels in vergrößertem Maßstab,

Figur 8 vereinfacht dargestellt das zweite Ausfürrungsbeispiel und

Figur 9 das dritte Ausführungsbeispiel mit einer Variante in Figur 10.

## Beschreibung der Ausführungsbeispiele

Ein Schwingförderer besteht aus Hauptbaugruppen, wie einem Antrieb, einer Nutzmasse mit Sortiertopf (Sortierschale), einem Steuergerät und einem als Gehäuse dienenden Grundkörper, der als Gegenmasse zur Nutzmasse dient. Aufgabe des Schwingförderers ist es, ungeordnete (geschüttete) Massenteile zu bunkern, zu fördern, zu ordnen und lagerichtig einer nachgeschalteten Maschine, Montageeinrichtung oder einem Magazin zu übergeben.

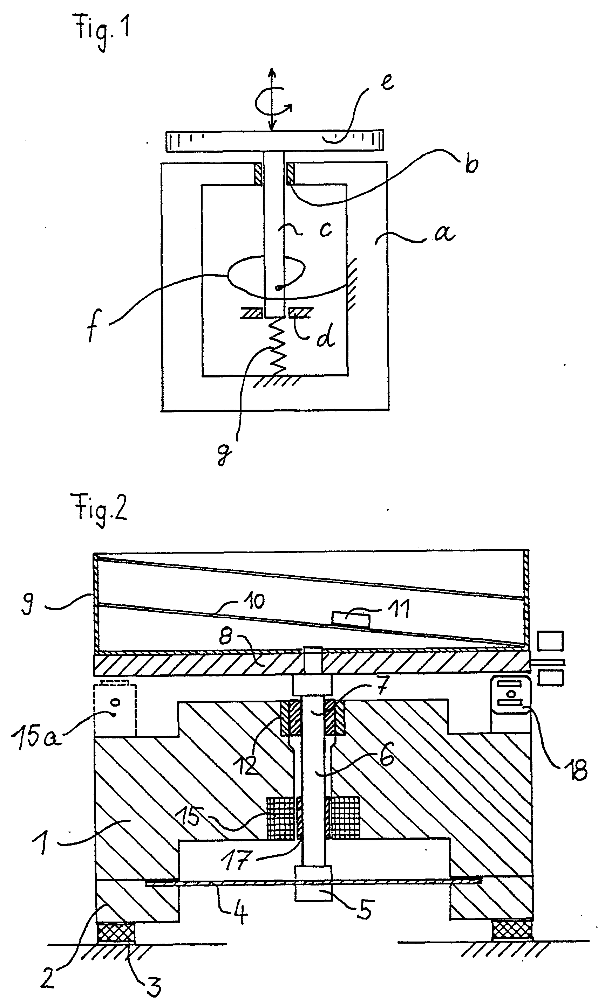

In Figur 1 ist die Erfindung prinzipiell dargestellt. Der als Gegenmasse dienende Grundkörper a nimmt in einer Lagerbohrung b eine Achse c auf, die bei d zusätzlich geführt ist. Auf dieser Achse c ist eine Nutzmasse e gelagert auf der wiederum eine hier nicht dargestellte Sortierschale angeordnet ist. Die Nutzmasse wird durch ebenfalls nicht dargestellte Antriebsmittel in eine Hubschwingung und eine Drehschwingung versetzt. Zur Speicherung der Energie dieser Hub- und Drehbewegung dienen an der Achse c angreifende Federn f und g. Die Feder f dient als Energiespeicher der Drehschwingung, die Feder g als Speicher der Hubschwingung. Die Energiespeicher wirken erfindungsgemäß unabhängig voneinander und sind somit- einander gegenüber rückwirkungsfrei. Zur Übertragung der gespeicherten Energie von den Speichern f und g auf die Nutzmasse dient jedoch nur ein Element, nämlich die Achse c.

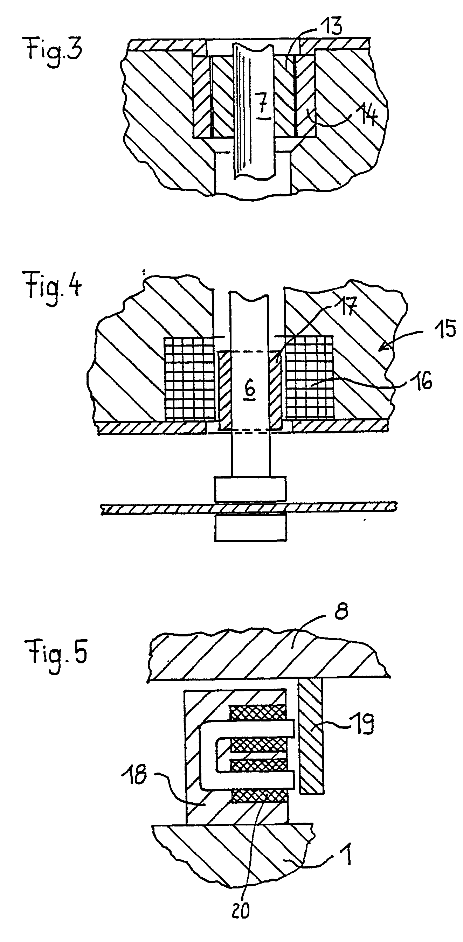

Das erste Ausführungsbeispiel der Erfindung ist in Figur 2 im Längsschnitt dargestellt. Der Grundkörper 1 ist auf einer Grundplatte 2 angeordnet, die über Gummiauflager 3 als Sockel der Maschine dient, zwischen Grundkörper 1 und Grundplatte 2 ist eine Membrane 4 eingespannt, an die das eine Ende 5 der Achse 6 gekoppelt ist, deren anderes Ende 7 mit der als Platte ausgebildeten Nutzmasse 8 verbunden ist. Auf der Nutzmasse 8 ist ein Sortiertopf 9 befestigt, auf dessen ansteigend verlaufenden Föderbahnen 10 Werkstücke 11 transportiert werden. Die Achse 6 ist bei 7 in einem Lager 12 geführt, welches eine Dreh- sowie Hubbewegung zuläßt. Dieses Lager 12 besteht - wie in Figur 3 dargestellt - aus zwei Hartmetall-Lagerringen, von denen der innere Ring 13 fest mit der Achse 6 verbunden ist und der äußere Ring 14 im Grundkörper 1 gelagert ist. Zwischen den Ringen 13 und 14 ist eine Drehbewegung sowie axiale Hubbewegung möglich. Dieses Lager arbeitet mit verhältnismäßig geringem Spiel und weist nur geringe Abnutzungen auf. Mittels dieses Lagers 12 und der Befestigung des Endes 5 der Achse 6 wird ein Kippen der Nutzmasse 8 verhindert.

Bei diesem ersten Ausführungsbeispiel erfolgt der Vertikalantrieb über einen Elektromagneten 15, wie er in vergrößertem Maßstab in Figur 4 dargestellt ist. Dieser Elektromagnet 15 weist eine Magnetspule 16 auf, die im Grundkörper 1 gelagert ist und mit einem Permanentmagnetring 17 zusammenwirkt, der als Ring um die Achse 6 gelegt und fest mit dieser verbunden ist. In der Ausgangslage ist der Ring 17 axial leicht gegenüber der Spule 16 verschoben, so daß ein elektrisches Erregen der Spule ein Hereinziehen des Ringes bewirkt.

Der Hubantrieb kann jedoch auch über einen Hubmagneten 15a erfolgen wie er gestrichelt in Figur 2 dargestellt ist, der unmittelbar an der Nutzmasse 8 als Rückschlußplatte (Anker) angreift. Wie in Figur 2 dargestellt, dient als Energiespeicher die Membran 4, die der Hubbewegung folgt und die aufgrund der eingegebenen Elastizität die Rückstellung bewirkt.

Der Antrieb für die Drehbewegung wird bei diesem Ausführungsbeispiel - wie in Figur 5 dargestellt - über Elektromagneten 18 erzielt, die mit dem Grundkörper 1 verbunden sind und mit Rückschlußplatte 19 zusammenwirken, welche wiederum mit der Nutzmasse 8 verbunden sind. Die Rückschlußplatte 19 ist rechtwinklig an der Nutzmasse 8 befestigt, so daß sie quer zu den Polen des Kerns der Magnetspule 20 des Elektromagneten 18 steht.

Bei diesem Ausführungsbeispiel dient als Energiespeicher der Drehschwingung die Achse 6, die als Drehstabfeder ausgebildet ist, und in ihrem Abschnitt 5 auch gegen Verdrehen gesichert an der Membrane 4 befestigt ist (Figur 2). Hierdurch sind in einfachster Art der Achse 6 mehrere Aufgaben übertragen worden. Außer der Übertragung der gespeicherten Energie bzw. der Rückstellkräfte des Schwingers für die Drehbewegung und Hubbewegung übernimmt die Achse 6 auch die Aufgabe der Drehenergiespeicherung.

Wie dargestellt erfolgen bei diesem Schwingförderer die Antriebe der Nub- und der Drehbewegung unabhängig voneinander. Der wesentliche Vorteil besteht darin, daß dadurch auch die Schwingungsverläufe gegeneinander verschiebbar sind, wonach so die Vertikalbewegung und die Horizontalbewegung gegeneinander phasenverschoben erfolgen können. Die Phasenverschiebung zwischen Hub- und Drehschwingung erlaubt die optimale Übertragung von Vorwärtsbewegung (Drehschwingung) mit dem Mittel der Hubbewegung (Massenkräfte drücken das Werkstück zu einem optimalen Zeitpunkt auf die Bahn und koppeln so das Werkstück im Optimum der Bewegung an). Dieses Verfahren hat nicht nur eine wesentliche Geräuschdämmung zur Folge, sondern auch eine schonendere Behandlung der Werkstücke. Der optimale Zeitpunkt für die Ankopplung der Werkstücke läßt sich durch Rechnung und Versuch ermitteln.

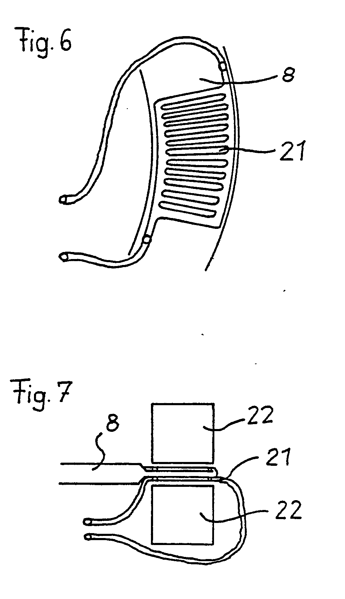

In Figur 6 und 7 ist eine Variante des ersten Ausführungsbeispiels im Detail vereinfacht dargestellt, bei der im Randbereich der Nutzmasse 8 ein elektrischer Leiter 21 eingelegt ist, dem gegenüber an der Grundplatte Permamentmagnete 22 befestigt sind, so daß je nach Stromrichtung im elektrischen Leiter 21 an der Nutzmasse 8 eine Drehkraft angreift.

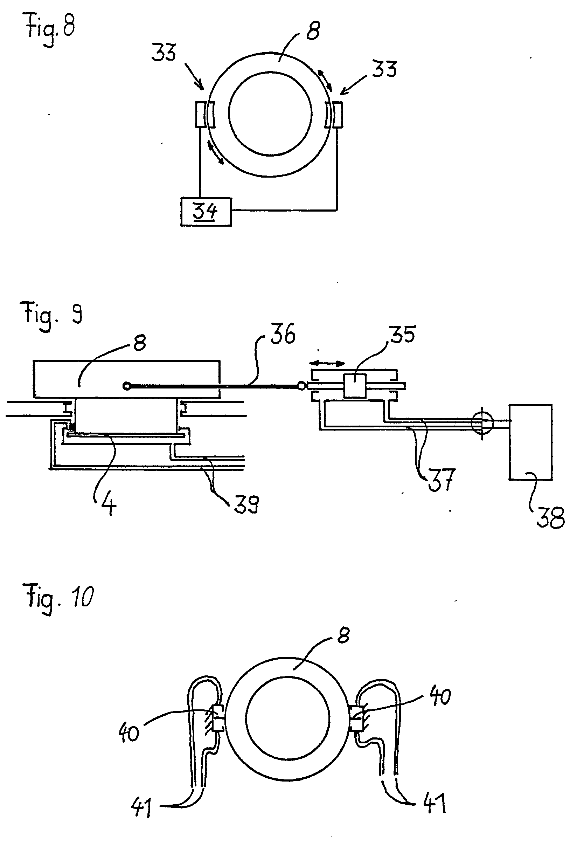

In dem in Figur 8 dargestellten zweiten Ausführungsbeispiel erfolgt der Antrieb für die Drehbewegung über einen Linearmotor 33. Um einen gleichmäßigen Angriff zu erhalten, sind mindestens zwei Linearmotoren an der Peripherie der Nutzmasse 8 vorgesehen. Die Ansteuerung erfolgt wie bei dem ersten Ausführungsbeispiel über ein elektrisches Steuergerät 34, das auch die Hubmagneterregung steuert.

Bei dem in Figur 9 dargestellten dritten Ausführungsbeispiel erfolgt der gesamte Antrieb pneumatisch. Die Nutzmasse 8 wird über einen hin- und hergehend und pneumatisch angetriebenen Kolben 35 in eine oszillierende Drehbewegung versetzt unter Zwischenschaltung eines einfachen Gestänges 36. Der Stellmotor 35 wird über Druckluftleitungen 37 von einem Steuergerät 38 entsprechend intermittierend mit Druckluft versorgt. Auch die Hubbewegung wird pneumatisch erzeugt, indem über Druckleitungen 39 beide Seiten der Membran 4 intermittierend beaufschlagt werden. Ein Vorteil der Verwendung von pneumatischen Mitteln besteht darin, daß auch die Lager pneumatisch sein können.

In Figur 10 ist eine Variante dieses dritten Ausführungsbeispiels dargestellt, bei der die Nutzmasse 8 mit Nasen 40 versehen ist, die intermittierend über Leitungen 41 mit Druckluft beaufschlagbar sind, wodurch die Drehbewegung erzeugt wird.

Die Verwendung pneumatischer Mittel hat den weiteren Vorteil, daß hier durch intermittierende Schaltung ein Teil der Energie rückgewonnen werden kann, indem die Luft nicht ungenutzt abbläst; die Luftpolster dienen hier auch als Energiespeicher.

**Patentansprüche**

1. Schwingförderer mit einer eine oszillierende Hubbewegung und eine oszillierende Drehbewegung ausführenden, eine Rüttelförderschale (9) tragenden Nutzmasse (8), einem als Gegenmasse ausgebildeten Grundkörper (1), einer Drehstabfeder (6), welche an ihrem einen Ende die Nutzmasse (8) trägt und am anderen Ende unverdrehbar, jedoch axial verschiebbar mit dem Grundkörper (1) gekoppelt ist, und ferner mit getrennten Antrieben (15, 18) und getrennten Energiespeichern (4, 6) für die Hub- und die Drehbewegung, wobei die Drehstabfeder (6) den Energiespeicher für die Drehbewegung und eine radialsymmetrische Blattfederanordnung (4), die außen mit dem Grundkörper (1) und innen mit dem dem Grundkörper (1) zugeordneten Ende der Drehstabfeder (6) verbunden ist, den Energiespeicher für die Hubbewegung bildet, dadurch gekennzeichnet, daß die als Energiespeicher für die Hubbewegung dienende Blattfederanordnung eine als Vollscheibe (4) ausgebildete Membranfeder ist, deren äußerer Rand am Grundkörper (1) fest eingespannt ist und in deren Zentrum das zugeordnete Ende (5) der Drehstabfeder (6) befestigt ist.

2. Schwingförderer nach Anspruch 1, dadurch gekennzeichnet, daß der Grundkörper (1) in seinem der Nutzmasse (8) zugekehrten Bereich mit einem Dreh- und Hublager (12) für die Drehstabfeder (6) versehen ist.

3. Schwingförderer nach Anspruch 2, dadurch gekennzeichnet, daß als Lagermaterial ein Hartmetall dient.

4. Schwingförderer nach einem der vorhergehenden Ansprüche, dadurch gekennzeichnet, daß das von der Nutzmasse (8) abgekehrte Ende (5) der Drehstabfeder (6) unverdrehbar, jedoch axial verschiebbar in einem Führungsteil (29) gelagert ist, welches fest mit dem Grundkörper (1) verbunden ist.

5. Schwingförderer nach einem der vorhergehenden Ansprüche, dadurch gekennzeichnet, daß als Hubantrieb in an sich bekannter Weise ein Elektromagnet (15) dient.

6. Schwingförderer nach Anspruch 5, dadurch gekennzeichnet, daß eine Ringspule (16) des Elektromagneten (15) um die Drehstabfeder (6) herum angeordnet ist und diese im Bereich der Ringspule (16) eine magnetische bzw. magnetisierbare Hülse (17) trägt.

7. Schwingförderer nach Anspruch 6, dadurch gekennzeichnet, daß die Hülse (17) ein Permanentmagnetringkörper ist.

8. Schwingförderer nach Anspruch 5 dadurch gekennzeichnet, daß mindestens zwei Hubmagnete (15a) zentralsymmetrisch zur Nutzmasse (8) und vorzugsweise an deren Randbereich angreifen.

9. Schwingförderer nach einem der Ansprüche 5 bis 8, dadurch gekennzeichnet, daß die Kraft der Elektromagnete (15, 15a) für beide Nutzhubeinrichtungen umschaltbar ist.

10. Schwingförderer nach einem der Ansprüche 5 bis 8 dadurch gekennzeichnet, daß die Kraft eines Teils der Elektromagnete (15, 15a) in der einen Nutzhubrichtung, die des anderen Teils in der anderen Richtung wirkt.

11. Schwingförderer nach einem der Ansprüche 1 bis 4, dadurch gekennzeichnet, daß der Nutzhub durch gasförmige oder flüssige Arbeitsmittel bewirkt ist, die über entsprechende Vorrichtungen an der Nutzmasse angreifen und über entsprechende Steuergeräte zeit- und druckgerecht dosiert werden.

12. Schwingförderer nach Anspruch 11. dadurch gekennzeichnet, daß die den Hubenergiespeicher bildende Membranfeder (4) gleichzeitig als Arbeitsfläche für die Arbeitsmittel dient.

13. Schwingförderer nach einem der vorhergehenden Ansprüche, mit einem elektrischen Drehantrieb, dadurch gekennzeichnet, daß die Nutzmasse (8) vorzugsweise an mehreren Stellen im Randbereich mit stromführenden Leitern (21) durchzogen ist, denen mit dem Grundkörper (1) verbundene Permanentmagnete (22) gegenüber liegen.

14. Schwingförderer nach einem der Ansprüche 1 bis 12, dadurch gekennzeichnet, daß als Drehantrieb mindestens ein elektrischer Linearmotor (33) dient, der an der Peripherie der Nutzmasse (8) angreift.

15. Schwingförderer nach einem der Ansprüche 1 bis 12, dadurch gekennzeichnet, daß die Drehbewegung durch gasförmige oder flüssige Arbeitsmittel bewirkt ist.

## Claims

1. Vibrator conveyor having an effective mass (8) executing an oscillating lifting movement and an oscillating rotary movement and carrying a shaker conveyor tray (9), a base element (1), designed as counter mass, a torsionbar spring (6), which at its one end carries the effective mass (8) and at its other end is coupled unpivotally, but axially displaceably to the base element (1), and also having separate drives (15, 18) and separate energy stores (4, 6) for the lifting movement and the rotary movement, the torsion-bar spring (6) forming the energy store for the rotary movement and a radially symmetrical leaf spring arrangement (4), which is connected on the outside to the base element (1) and on the inside to the end of the torsion-bar spring (6) associated with the base element (1), forms the energy store for the lifting movement, characterized in that the leaf spring arrangement serving as energy store for the lifting movement is a diaphragm spring designed as a solid disc (4), the outer edge of which is firmly clamped on the base element (1) and in the centre of which the associated end (5) of the torsion-bar spring (6) is fixed.

2. Vibrator conveyor according to Claim 1, characterized in that the base element (1) is provided in its area facing the effective mass (8) with a rotary and lifting bearing (12) for the torsion-bar spring (6).

3. Vibrator conveyor according to Claim 2, characterized in that a hard metal serves as bearing material.

4. Vibrator conveyor according to one of the preceding claims, characterized in that the end (5) of the torsionbar spring (6) remote from the effective mass (8) is mounted unpivotally, but axially displaceably in a guide part (29), uh ich is firmly connected to the base element (1).

5. Vibrator conveyor according to one of the preceding claims, characterized in that an electromagnet (15) serves as lifting drive in a way known per se.

6. Vibrator conveyor according to Claim 5, characterized in that a ring coil (16) of the electromagnet (15) is arranged around the torsion-bar spring (6) and the latter carries, in the region of the ring coil (16), a magnetic or magnetizable sleeve (17).

7. Vibrator conveyor according to Claim 6, characterized in that the sleeve (17) is a permanent magnet ring element.

8. Vibrator conveyor according to Claim 5, characterized in that at least two lifting magnets (15a) act centrosymmetrically with respect to the effective mass (8) and preferably at its edge region.

9. Vibrator conveyor according to one of Claims 5 to 8, characterized in that the force of the electromagnets (15, 15a) can be reversed for both effective lifting devices.

10. Vibrator conveyor according to one of Claims 5 to 8, characterized in that the force of a part of the electromagnets (15, 15a) acts in the one effective lifting direction, that of the other part acts in the other direction.

11. Vibrator conveyor according to one of Claims 1 to 4, characterized in that the useful lift is effected by gaseous or liquid working media, which act via corresponding means on the effective mass and are metered with appropriate timing and at the appropriate pressure via corresponding control devices.

12. Vibrator conveyor according to Claim 11, characterized in that the diaphragm spring (4) forming the lifting energy store at the same time serves as working surface for the working media.

13. Vibrator conveyor according to one of the preceding claims, with an electric rotary drive, characterized in that the effective mass (8) preferably has current-carrying conductors (21) drawn through it at several points of its edge region, opposite which conductors lie permanent magnets (22) connected to the base element (1).

14. Vibrator conveyor according to one of Claims 1 to 12, characterized in that at least one electric linear motor (33), which acts on the periphery of the effective mass (8), serves as rotary drive.

15. Vibrator conveyor according to one of Claims 1 to 12, characterized in that the rotary movement is effected by gaseous or liquid working media.

## Revendications

1. Transporteur oscillant pourvu d'une masse utile (8) portant un bac à transporter vibrant (9) et effectuant un mouvement de levage oscillant en va et vient et un mouvement de rotation oscillant en va et vient, d'un corps de base (1) constitué en tant que contre-masse, d'un ressort à barre de torsion (6), qui porte à l'une de ses extrémités la masse utile (8) et est accouplé à l'autre extrémité avec le corps de base (1), de façon à ne pouvoir subir de torsion, mais à pouvoir se déplacer en direction axiale, et pourvu en outre d'entraînements séparés (15, 18) et de réservoirs d'énergie séparés (4, 6) pour les mouvements de levage et de rotation, le ressort à barre de torsion (6) formant le réservoir d'énergie pour le mouvement de rotation, et un dispositif de ressort à lames (4) à symétrie radiale, qui est relié extérieurement au corps de base (1) et intérieurement à l'extrémité du de ressort à base de torsion (6) associée au corps de base (1), formant le réservoir d'énergie pour le mouvement de levage, transporteur oscillant caractérisé en ce que le dispositif de ressort à lames servant de réservoir d'énergie pour le mouvement de levage est un ressort à membrane constitué sous la forme de disque plein (4), dont le bord extérieur est fermement enserré contre le corps de base (1) et au centre duquel est fixée l'extrémité associée (5) du ressort à barre de torsion (6).

2. Transporteur oscillant selon la revendication 1, caractérisé en ce que le corps de base (1) est muni, dans sa zone située en regard de la masse utile (8), d'un palier de rotation et de levage (12) pour le ressort à barre de torsion (6).

3. Transporteur oscillant selon la revendication 2, caractérisé en ce que comme matériau de palier est utilisé un métal dur.

4. Transporteur oscillant selon l'une des revendications précédentes, caractérisé en ce que l'extrémité (5) du ressort à barre de torsion (6) située à l'opposé de la masse utile (8) est logée, de façon à ne pouvoir subir de torsion, mais à pouvoir se déplacer en direction axiale, dans un élément de guidage qui est relié rigidement au corps de base (1).

5. Transporteur oscillant selon l'une des revendications précédentes, caractérisé en ce que, comme entraînement pour le levage est utilisé, de manière connue en soi, un électro-aimant (15).

6. Transporteur oscillant selon la revendication 5, caractérisé en ce que, une bobine annulaire (16) de l'électro-aimant (15) est disposée tout autour du ressort à barre de torsion (6), et celui-ci porte, dans la zone de la bobine annulaire (16), un manchon (17) magnétique ou magnétisable.

7. Transporteur oscillant selon la revendication 6, caractérisé en ce que le manchon (17) est un corps annulaire d'aimant permanent.

8. Transporteur oscillant selon la revendication 5, caractérisé en ce que, au moins deux aimants de levage (15a) agissent symétriquement par rapport au centre de la masse utile (8) et de préférence sur sa zone de bord.

9. Transporteur oscillant selon l'une des revendications 5 à 8, caractérisé en ce que la force des électro-aimants (15, 15a) est réversible pour les deux sens de levage utile.

10. Transporteur oscillant selon l'une des revendications 5 à 8, caractérisé en ce que la force d'une partie des électro-aimants (15, 15a) agit dans l'un des sens de levage utile, celle de l'autre partie dans l'autre sens.

11. Transporteur oscillant selon l'une des revendications 1 à 4, caractérisé en ce que le levage utile est assuré par des agents de travail sous forme gazeuse, ou liquides, qui agissent sur la masse utile par l'intermédiaire de dispositifs appropriés et sont dosés correctement en temps et pression au moyen d'appareils de commande appropriés.

12. Transporteur oscillant selon la revendication 11, caractérisé en ce que le ressort à membrane (4) formant le réservoir d'énergie pour le levage sert en même temps de surface de travail pour les moyens de travail.

13. Transporteur oscillant selon l'une des revendications précédentes, comportant un entraînement électrique pour la rotation, caractérisé en ce que la masse utile (8) est traversée, de préférence en plusieurs endroits dans la zone de bord, par des conducteurs (21) faisant passer le courant, auxquels font face des aimants permanents (22) reliés au corps de base (1).

14. Transporteur oscillant selon l'une des revendications 1 à 12, caractérisé en ce que comme entraînement pour la rotation est utilisé au moins un moteur linéaire électrique (33), qui agit sur la périphérie de la masse utile (8).

15. Transporteur oscillant selon l'une des revendications 1 à 12, caractérisé en ce que le mouvement de rotation est assuré par des moyens de travail sous forme gazeuse, ou liquides.

Fig. 1

Fig. 2

1

Fig.3

Fig.4

Fig.5

Fig. 6

8

21

Fig. 7

8

22

21

22

Fig. 8

Fig. 9

Fig. 10